# EUROPEAN PATENT SPECIFICATION

(11) **EP 4 310 672 B1**
(45) Date of publication and mention of the grant of the patent: **26.11.2025**
(21) Application number: 22794569.8
(22) Date of filing: 11.04.2022
(51) Int. Cl.: G06F 9/445, G06F 9/48, G06F 9/50, G06F 9/54

(54) **APPLICATION KEEP-ALIVE METHOD, ELECTRONIC DEVICE AND A STORAGE MEDIUM**
ANWENDUNGS-KEEP-ALIVE-VERFAHREN, ELEKTRONISCHE VORRICHTUNG UND SPEICHERMEDIUM
PROCÉDÉ DE MAINTIEN D'APPLICATION, DISPOSITIF ÉLECTRONIQUE ET SUPPORT DE STOCKAGE

(30) Priority: 25.04.2021 CN 202110449195
(43) Date of publication of application: 24.01.2024
(73) Proprietor: Huawei Technologies Co., Ltd., Longgang Shenzhen, Guangdong 518129 (CN)
(72) Inventor: LI, Haoran, Shenzhen, Guangdong 518129 (CN); GUO, Yubing, Shenzhen, Guangdong 518129 (CN); DAI, Zhicheng, Shenzhen, Guangdong 518129 (CN); ZENG, Min, Shenzhen, Guangdong 518129 (CN)
(74) Representative: Goddar, Heinz J.
(86) International application number: PCT/CN2022/086101
(87) International publication number: WO 2022/228098

(56) References cited:
- CN-A- 108 737 161
- CN-A- 110 798 349
- CN-A- 110 958 151
- US-A1- 2013 262 670
- OTSTOTT DOUGLAS ET AL: "TCASM: An asynchronous shared memory interface for high-performance application composition", PARALLEL COMPUTING, vol. 63, 24 January 2017 (2017-01-24), pages 61 - 78, XP029992154, ISSN: 0167-8191, DOI: 10.1016/J.PARCO.2017.01.003

## Description

This application claims priority to Chinese Patent Application No. 202110449195.8, filed with the China National Intellectual Property Administration on April 25, 2021 and entitled "APPLICATION KEEPALIVE METHOD, ELECTRONIC DEVICE, AND STORAGE MEDIUM

### TECHNICAL FIELD

Embodiments of this application relate to the field of electronic devices, and in particular, to an application keepalive method, an electronic device, and a storage medium.

### BACKGROUND

An application collaboration function means a function in which two application (application, App) programs collaborate to provide a service for a user, and the application collaboration function may bring an extensive experience to the user. The application program may be referred to as an application for short. For example, a first application is installed on a first device, and a second application is installed on a second device. When the first device is connected to the second device, the first application and the second application may collaborate to provide a service for a user, and the user may view, on the second device by using the second application, information in the first application on the first device.

In a process in which the first application and the second application collaborate to provide the service for the user, an operating system of the first device may forcibly kill some applications running on the first device to release system resources due to a limitation of the system resources (the system resources are insufficient). When the applications killed by the first device include the first application (the first application may be referred to as an associated application of the application collaboration function), the application collaboration function between the first application and the second application is affected, consequently affecting user experience.

Currently, for the foregoing problem that the application collaboration function between the first application and the second application is affected, in an implementation, the second application may register a death notification of the first application. When the first application is killed by the first device, the second application may receive the death notification of the first application, and restart the second application, so as to continue to implement the application collaboration function between the first application and the second application. However, in this implementation, the second application receives the death notification of the first application only after the first application is killed. In this case, the application collaboration function between the first application and the second application has been already affected.

In another implementation, a heartbeat relationship may be established between the first application and the second application, and the second application may periodically send a heartbeat message to the first application. When the operating system of the first device forcibly kills some applications running on the first device to release the system resources, if the heartbeat message that the second application periodically sends to the first application is detected, a time to live of the first application may be prolonged. In this implementation, although the application collaboration function between the first application and the second application may be prevented from being affected, power consumption of the first device and the second device is greatly increased.
Otstott Douglas et al: "TCASM: An asynchronous shared memory interface for high-performance application composition", Parallel Computing, vol. 63, 24 January 2017, addresses the growing need for mechanisms supporting intra-node application composition in high-performance computing (HPC) systems. It provides a novel shared memory interface that allows composite applications, two or more coupled applications, to share internal data structures without blocking. This allows independent progress of the applications such that they can proceed in a parallel, overlapped fashion. Composite applications using in-node shared memory can reduce the amount of data to be communicated between nodes, allowing checkpointing and data reduction or analytics to be performed locally and in parallel. The approach is implemented in Linux, and evaluated using benchmarks that represent typical composite applications on a large HPC testbed. The results show that the proposed approach significantly outperforms the traditional ones (up to a 15-fold speed increase on a 200 node machine).

### SUMMARY

To resolve the foregoing problem, embodiments of this application provide an application keep alive method according to claim 1, an electronic device according to claim 10 and a computer-readable storage medium according to claim 11. The technical solutions in embodiments of this application may be applicable to a scenario in which an application collaboration function is implemented between a first application and a second application, and prolong a time to live of the first application, so as to prevent the application collaboration function between the first application and the second application from being affected. In addition, power consumption of a device in which the first application and the second application are located is lower.

According to a first aspect, an embodiment of this application provides an application keepalive method. The method is applied to a first device, the first device includes a first application, and there is an application collaboration function between the first application and a second application. The method includes: When the first application detects that the second application obtains first information in the first application, the first application creates a first object, and generates a unique identifier of the first object. The first application sends the unique identifier of the first object to the second application. The first application receives a subscription request that is sent by the second application based on the unique identifier of the first object. The subscription request includes identification information of the second application. The first application adds the identification information of the second application to a subscription list of the first object based on the subscription request. When an operating system of the first device needs to forcibly kill some applications running on the first device to release system resources due to a limitation of the system resources, for the first application, the operating system of the first device queries the subscription list of the first object; and the operating system of the first device prolongs a time to live of the first application if the subscription list of the first object includes the identification information of the second application.

In this embodiment of this application, in a process in which a user views the first information in the first application by using the second application, when the operating system of the first device needs to forcibly kill some applications running on the first device to release the system resources due to the limitation of the system resources, for the first application, the first device may first query the subscription list of the first object. If the subscription list of the first object includes the identification information of the second application, it indicates that a collaborative relationship exists between the first application and the second application, and the first device can prolong the time to live of the first application, to prevent the application collaboration function between the first application and the second application being affected.

It can be learned that, in the method, the collaborative relationship between the first application and the second application may be established in a simple manner, and no periodic heartbeat is required. Therefore, power consumption of the first device and the second device may be low. In addition, compared with a manner in which the first application is restarted after being killed, the method may provide a better user experience.

According to the first aspect, that the operating system of the first device prolongs a time to live of the first application includes: The operating system of the first device increases a priority of the first application in all applications that are currently running on the first device by at least one priority. A higher priority indicates a longer time to live of the application.

Optionally, that the operating system of the first device increases a priority of the first application in all applications that are currently running in the first device by at least one priority includes: The operating system of the first device increases the priority of the first application in all the applications that are currently running on the first device to a highest priority.

According to the first aspect or any one of the foregoing implementations of the first aspect, the subscription request is sent by the second application to the first application after the second application verifies that the second application has permission to read the unique identifier of the first object.

In this implementation, after receiving the unique identifier of the first object from the first application, the second application first verifies the unique identifier of the first object. After determining that the second application has the permission to read the unique identifier of the first object, a subsequent step (that is, sending the subscription request) is performed, so that user privacy can be better protected.

According to the first aspect or any one of the foregoing implementations of the first aspect, that the first application adds the identification information of the second application to a subscription list of the first object based on the subscription request includes: The first application verifies whether the second application has permission to subscribe to the first object. The first application adds the identification information of the second application to the subscription list of the first object based on the subscription request after the first application verifies that the second application has the permission to subscribe to the first object.

In this implementation, after receiving the subscription request from the second application, the first application first verifies the subscription request. After determining that the second application has the permission to subscribe to the first object, a subsequent step is performed, so that user privacy can be better protected.

In other words, because the application keepalive method relates to operating data of an application, in the method, an application keepalive may be implemented only after the user agrees and grants corresponding permission, so as to better protect user privacy.

According to the first aspect or any one of the foregoing implementations of the first aspect, the method further includes: The first application receives a subscription cancellation request that is sent by the second application based on the unique identifier of the first object. The subscription cancellation request includes the identification information of the second application. The first application deletes the identification information of the second application from the subscription list of the first object based on the subscription cancellation request. When the operating system of the first device needs to forcibly kill some applications running on the first device to release the system resources due to the limitation of the system resources, for the first application, the operating system of the first device queries the subscription list of the first object; and the operating system of the first device skips prolonging the time to live of the first application if the subscription list of the first object does not include the identification information of the second application.

According to the first aspect or any one of the foregoing implementations of the first aspect, the unique identifier of the first object includes device information of the first device, application information of the first application, object information of the first object, and timestamp information generated when the first object is created.

It should be noted that a specific format of the unique identifier of the first object is not limited in this application.

According to the first aspect or any one of the foregoing implementations of the first aspect, the first application and the second application are located in a same device or different devices.

For example, in an implementation, the second application may be installed on the second device, and the first device is different from the second device.

For another example, in another implementation, the second application may alternatively be installed on the first device.

According to the first aspect or any one of the foregoing implementations of the first aspect, the second application includes a plurality of third applications. That the operating system of the first device prolongs a time to live of the first application if the subscription list of the first object includes the identification information of the second application includes: The operating system of the first device prolongs the time to live of the first application if the subscription list of the first object includes identification information of at least one third application.

For example, in a case in which there are a plurality of applications that implement a collaboration function with the first application, when the operating system of the first device needs to forcibly kill some applications running on the first device to release the system resources due to the limitation of the system resources, for the first application, the operating system of the first device may first query the subscription list of the first object. If the subscription list of the first object includes identification information of another application, it indicates that the first object is subscribed to by the another application, a collaborative relationship exists between the first application and the another application, and the operating system of the first device can prolong the time to live of the first application.

According to a second aspect, an embodiment of this application provides an electronic device, including a processor, a memory, and a computer program. The computer program is stored in the memory, and when the computer program is executed by the processor, the electronic device is caused to implement the application keepalive method according to the first aspect and any one of the implementations of the first aspect.

According to a third aspect, an embodiment of this application provides a computer-readable storage medium. The computer-readable storage medium includes a computer program, and when the computer program is run on an electronic device, the electronic device is caused to implement the application keepalive method according to the first aspect and any one of the implementations of the first aspect.

For technical effects corresponding to the second aspect and any one of implementations of the second aspect, and the third aspect and any one of implementations of the third aspect, refer to the technical effects corresponding to the first aspect and any one of implementations of the first aspect. Details are not described herein again.

### BRIEF DESCRIPTION OF DRAWINGS

FIG. 1 is a schematic diagram of an application scenario according to an embodiment of this application;
FIG. 2 is a schematic diagram of a structure of a first device according to an embodiment of this application;
FIG. 3 is a schematic flowchart of an application keepalive method according to an embodiment of this application;
FIG. 4 is another schematic flowchart of an application keepalive method according to an embodiment of this application;
FIG. 5 is a schematic diagram of a structure of an application keepalive apparatus according to an embodiment of this application; and
FIG. 6 is a schematic diagram of another structure of an application keepalive apparatus according to an embodiment of this application.

### DESCRIPTION OF EMBODIMENTS

Terms used in the following embodiments are only intended to describe specific embodiments, but are not intended to limit this application. The terms "one", "a", "the", "the foregoing", "this", and "the one" of singular expressions used in this specification and the appended claims of this application are also intended to include expressions such as "one or more", unless otherwise specified in the context clearly. It should be further understood that in the following embodiments of this application, "at least one" and "one or more" mean one, two, or more. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner. The term "connection" includes a direct connection and an indirect connection, unless otherwise stated.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features.

In embodiments of this application, the word "example", "for example", or the like is used to represent giving an example, an illustration, or a description. Any embodiment or design scheme described as "example" or "for example" in embodiments of this application shall not be explained as being more preferred or having more advantages than another embodiment or design scheme. Exactly, use of the word "example", "for example", or the like is intended to present a relative concept in a specific manner.

An application collaboration function means a function in which two application (application, App) programs collaborate to provide a service for a user, and the application collaboration function may bring an extensive experience to the user. The application program may be referred to as an application for short. For example, a first application is installed on a first device, and a second application is installed on a second device. When the first device is connected to the second device, the first application and the second application may collaborate to provide a service for a user, and the user may view, on the second device by using the second application, information in the first application on the first device.

In a process in which the first application and the second application collaborate to provide the service for the user, an operating system of the first device may forcibly kill some applications running on the first device to release system resources due to a limitation of the system resources (the system resources are insufficient). Killing an application is to end a process of the application. When the applications killed by the operating system of the first device include the first application (the first application may be referred to as an associated application of the application collaboration function), the application collaboration function between the first application and the second application is affected, consequently affecting user experience.

For example, it is assumed that the first device is a mobile phone, the first application is a gallery application 1 installed on the mobile phone, the second device is a smartwatch, and the second application is a gallery application 2 installed on the smartwatch. When the mobile phone is connected to the smartwatch, the gallery application 1 and the gallery application 2 may collaborate to provide a service for the user, and the user may view, on the smartwatch by using the gallery application 2, a picture in the gallery application 1 on the mobile phone.

In a process in which the gallery application 1 and the gallery application 2 collaborate to provide the service for the user, an operating system of the mobile phone may forcibly kill some applications running on the mobile phone to release system resources due to a limitation of the system resources. If the applications killed by the mobile phone include the gallery application 1, the application collaboration function between the gallery application 1 and the gallery application 2 is affected, and the gallery application 1 and the gallery application 2 cannot continue to collaborate to provide the service for the user. In this case, an operation of viewing, by the user on the smartwatch by using the gallery application 2, the picture in the gallery application 1 on the mobile phone may be forcibly interrupted. Consequently, the user cannot continue to view, on the smartwatch by using the gallery application 2, the picture in the gallery application 1 on the mobile phone, and user experience is greatly affected.

Currently, for the foregoing problem that the application collaboration function between the first application and the second application is affected, in an implementation, the second application may register a death notification of the first application. When the first application is killed by the first device, the second application may receive the death notification of the first application, and restart the second application, so as to continue to implement the application collaboration function between the first application and the second application. However, in this implementation, the second application receives the death notification of the first application only after the first application is killed. In this case, the application collaboration function between the first application and the second application has been already affected.

In another implementation, a heartbeat relationship may be established between the first application and the second application, and the second application may periodically send a heartbeat message to the first application. When the operating system of the first device forcibly kills some applications running on the first device to release the system resources, if the heartbeat message that the second application periodically sends to the first application is detected, a time to live of the first application may be prolonged. In this implementation, although the application collaboration function between the first application and the second application may be prevented from being affected, power consumption of the first device and the second device is greatly increased.

In this background, an embodiment of this application provides an application keepalive method, which may be applied to a scenario in which the application collaboration function is implemented between the foregoing first application and the foregoing second application. The method may include: When the second application receives an operation of viewing first information in the first application by a user, the second application obtains the first information from the first application, and displays the first information to the user. When the first application detects that the second application obtains the first information, the first application creates a first object, and generates a unique identifier of the first object. After generating the unique identifier of the first object, the first application sends (shares) the unique identifier of the first object to the second application. The second application sends a subscription request to the first application based on the unique identifier of the first object. The subscription request is used to indicate, to the first application, that the second application subscribes to the first object, and the subscription request may include identification information of the second application. After receiving the subscription request, the first application adds the identification information of the second application to a subscription list of the first object based on the subscription request. After the first application adds the identification information of the second application to the subscription list of the first object, it indicates that a collaborative relationship (or referred to as a dependence relationship) is established between the first application and the second application.

In a process in which the user views the first information in the first application by using the second application, when the operating system of the first device needs to forcibly kill some applications running on the first device to release system resources due to a limitation of the system resources, for the first application, the operating system of the first device may first query the subscription list of the first object. If the subscription list of the first object includes the identification information of the second application, it indicates that a collaborative relationship exists between the first application and the second application, and the operating system of the first device can prolong a time to live of the first application. By using the application keepalive method, the time to live of the first application can be prolonged to prevent the application collaboration function between the first application and the second application from being affected. In addition, power consumption of the first device and the second device may be low.

The following describes the technical solutions in embodiments of this application with reference to the accompanying drawings by using an example.

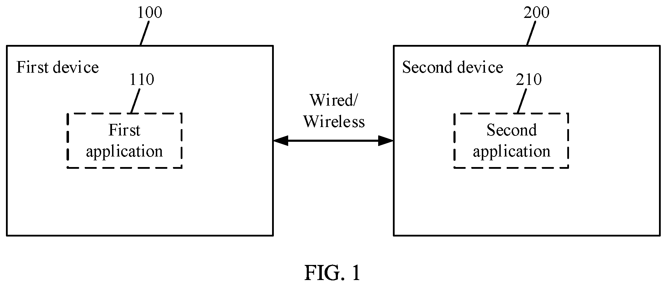

FIG. 1 is a schematic diagram of an application scenario according to an embodiment of this application. As shown in FIG. 1, the application scenario in this embodiment of this application may include a first device 100 and a second device 200. A connection may be established between the first device 100 and the second device 200 in a wired or wireless manner. A first application 110 is installed on the first device 100, and a second application 210 is installed on the second device 200. When the first device 100 is connected to the second device 200, the first application 110 and the second application 210 may collaborate to provide a service for a user, and the user may view, on the second device 200 by using the second application 210, information in the first application 110 on the first device 100.

Optionally, a wireless communication protocol used when the first device 100 and the second device 200 establish a connection in a wireless manner may be a wireless fidelity (wireless fidelity, Wi-Fi) protocol, a Bluetooth (Bluetooth) protocol, a ZigBee protocol, a near field communication (near field communication, NFC) protocol, various cellular network protocols, or the like. This is not specifically limited herein.

During specific implementation, the foregoing first device 100 and/or the second device 200 may be a mobile phone, a tablet computer, a handheld computer, a PC, a cellular phone, a personal digital assistant (personal digital assistant, PDA), a wearable device (for example, a smartwatch or a smart bracelet), a smart home device (for example, a television), an in-vehicle infotainment system (for example, a vehicle-mounted computer), a smart screen, a game console, a headset, an artificial intelligence (artificial intelligence, AI) sound box, an augmented reality (augmented reality, AR)/(virtual reality, VR) device, or the like. Specific device forms of the first device 100 and the second device 200 are not specially limited in this embodiment of this application.

Optionally, in some embodiments, the device forms of the first device 100 and the second device 200 may be the same. For example, both the first device 100 and the second device 200 are mobile phones.

Alternatively, in some other embodiments, the device forms of the first device 100 and the second device 200 may be different. For example, the first device 100 may be a mobile phone, and the second device 200 may be a smartwatch.

The foregoing first device 100 and the second device 200 may either be touchscreen devices or non-touchscreen devices.

Optionally, operating systems of the first device 100 or the second device 200 or both may be an AndroidTM (android) system, an iOSTM system, a WindowsTM system, a MacTM system, a LinuxTM system, or the like. More specifically, the system may alternatively be a XiaomiTM system, an EMUITM system, an Android WearTM system, a Lite OSTM system, a TizenTM system, a watch OSTM system, or the like.

In some embodiments, the operating systems of the first device 100 and the second device 200 may be the same. In some other embodiments, the operating systems of the first device 100 and the second device 200 may alternatively be different. The operating systems of the first device 100 or the second device 200 or both are not specifically limited in this embodiment of this application.

As an example, the first device 100 and the second device 200 may separately include a memory, a processor, and a display. The memory may be configured to store the operating system, and the processor may be configured to run the operating system stored in the memory. The display may be used to display various user interfaces (user interfaces, UIs). The display of the first device 100 may be used to display an application interface of the first application installed on the first device 100 and a user interaction interface of the operating system of the first device 100.

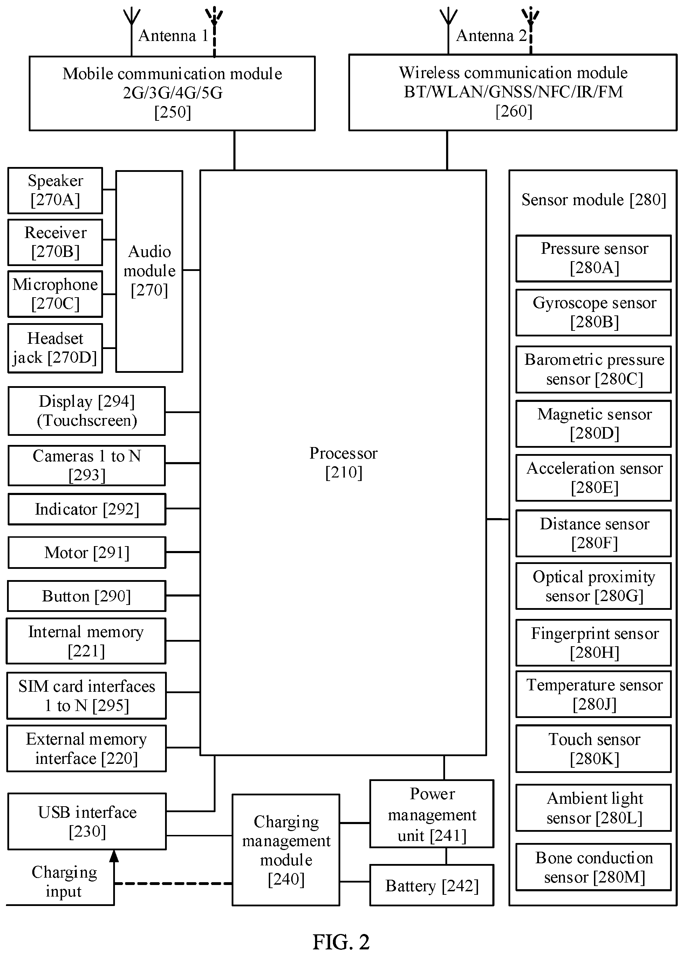

For example, FIG. 2 is a schematic diagram of a structure of the first device according to this embodiment of this application. As shown in FIG. 2, taking the first device 100 as a mobile phone for example, the first device 100 may include a processor 210, an external memory interface 220, an internal memory 221, a universal serial bus (universal serial bus, USB) interface 230, a charging management module 240, a power management unit 241, a battery 242, an antenna 1, an antenna 2, a mobile communication module 250, a wireless communication module 260, an audio module 270, a speaker 270A, a receiver 270B, a microphone 270C, a headset jack 270D, a sensor module 280, a button 290, a motor 291, an indicator 292, a camera 293, a display 294, a subscriber identification module (subscriber identification module, SIM) card interface 295, and the like.

The processor 210 may include one or more processing units. For example, the processor 210 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone. The controller may generate an operation control signal based on an instruction operation code and a time sequence signal, to complete control of instruction reading and instruction execution.

The memory may be further disposed in the processor 210, and is configured to store instructions and data. In some embodiments, the memory in the processor 210 is a cache. The memory may store instructions or data newly used or cyclically used by the processor 210. If the processor 210 needs to use the instructions or the data again, the processor 210 may directly invoke the instructions or the data from the memory. This avoids repeated access, reduces waiting time of the processor 210, and improves system efficiency.

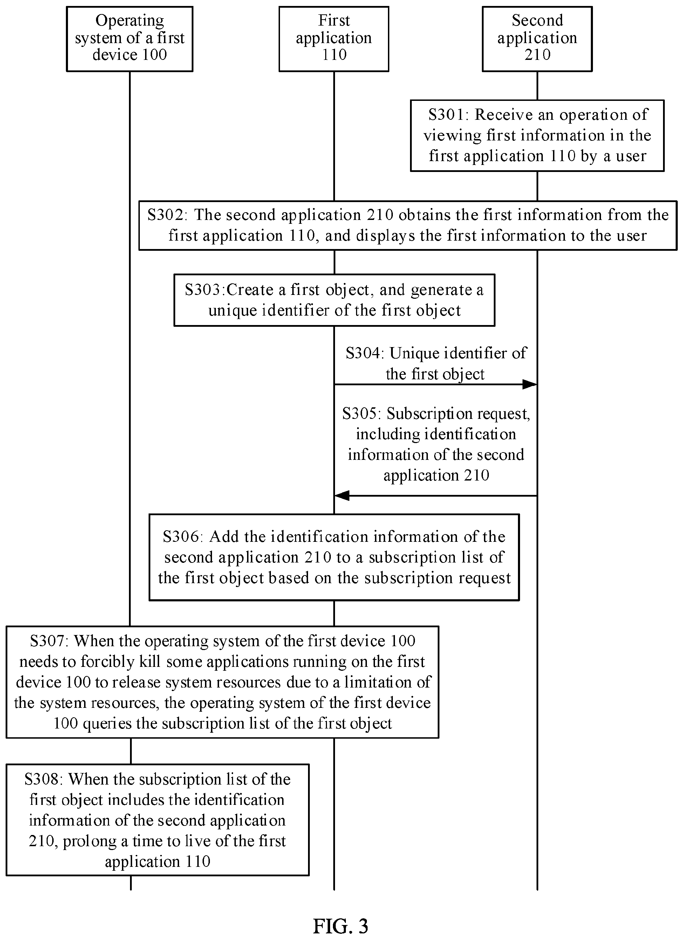

An application keepalive method provided in this embodiment of this application may be implemented by writing code or a program into the processor 210. When the processor 210 executes the code or the program, the first device 100 may implement the application keepalive method provided in this embodiment of this application. For example, the first application 110 in the first device 100 may implement the following steps such as S303, S304, and S306 shown in FIG. 3. The operating system of the first device 100 may implement S307 and S308 shown in FIG. 3.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The external memory interface 220 may be configured to connect to an external memory card, for example, a micro SD card, to extend a storage capability of the mobile phone. The external memory card communicates with the processor 210 through the external memory interface 220, to implement a data storage function. For example, files such as music and videos are stored in the external memory card.

The internal memory 221 may be configured to store computer executable program code, and the executable program code includes instructions. The processor 210 runs the instructions stored in the internal memory 221, to implement various function applications and data processing of the mobile phone. The internal memory 221 may include a program storage area and a data storage area. The program storage area may store an operating system, an application required by at least one function (for example, a sound playing function and an image playing function), and the like. The data storage area may store data (for example, image data and a phone book) and the like created during use of the mobile phone. In addition, the internal memory 221 may include a high-speed random access memory, or may include a non-volatile memory, for example, at least one magnetic disk storage device, a flash memory device, or a universal flash storage (universal flash storage, UFS).

The charging management module 240 is configured to receive a charging input from a charger. The charging management module 240 may further supply power to the mobile phone by using the power management unit 241 while charging the battery 242. The power management unit 241 is configured to connect to the battery 242, the charging management module 240, and the processor 210. The power management unit 241 may also receive an input from the battery 242 to supply power to the mobile phone.

A wireless communication function of the mobile phone may be implemented by using the antenna 1, the antenna 2, the mobile communication module 250, the wireless communication module 260, the modem processor, the baseband processor, and the like. The antenna 1 and the antenna 2 are configured to transmit and receive electromagnetic wave signals. Each antenna in the mobile phone may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile phone may implement an audio function, for example, music playing and recording, through the audio module 270, the speaker 270A, the telephone receiver 270B, the microphone 270C, the headset jack 270D, the application processor, and the like.

The sensor module 280 may include a pressure sensor 280A, a gyroscope sensor 280B, a barometric pressure sensor 280C, a magnetic sensor 280D, an acceleration sensor 280E, a distance sensor 280F, an optical proximity sensor 280G, a fingerprint sensor 280H, a temperature sensor 280J, a touch sensor 280K, an ambient light sensor 280L, a bone conduction sensor 280M, and the like.

The display 294 is configured to display an image, a video, and the like. The display 294 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flexible light-emitting diode, FLED), a mini-LED, a micro-LED, a micro-OLED, a quantum dot light-emitting diode (quantum dot light emitting diode, QLED), or the like. In some embodiments, the mobile phone may include one or M displays 294, where M is a positive integer greater than 1. For example, the display 294 may be configured to display a display interface of an application.

The mobile phone implements a display function by using the GPU, the display 294, the application processor, and the like. The GPU is a microprocessor for image processing, and is connected to the display 294 and the application processor. The GPU is configured to: perform mathematical and geometric computation, and render an image. The processor 210 may include one or more GPUs that execute program instructions to generate or change display information.

It may be understood that the structure shown in FIG. 2 does not constitute a specific limitation on the mobile phone. In some embodiments, the mobile phone may alternatively include more or fewer components than those shown in FIG. 2, some components may be combined, some components may be split, different component arrangements may be used, or the like. Alternatively, some components shown in FIG. 2 may be implemented by hardware, software, or a combination of software and hardware.

In addition, when the first device 100 is another terminal device such as a tablet computer, a handheld computer, a PC, a cellular phone, a PDA, a wearable device, a smart home device, an in-vehicle infotainment system, a smart screen, a game console, a headset, an AI sound box, an AR/VR device, or the like, a specific structure of the another terminal device can also refer to FIG. 2. For example, components may be added to or removed from the another terminal device based on the structure shown in FIG. 2. Details are not described herein again.

When a device form of the second device 200 is the same as a device form of the first device 100, a structure of the second device 200 is the same as a structure of the first device 100. When the device form of the second device 200 is different from the device form of the first device 100, the structure of the second device 200 may also refer to FIG. 2. Components may be added to or removed from based on the structure shown in FIG. 2. Details are not described herein again.

Optionally, an application type of the first application 110 and an application type of the second application 210 may be the same or different. For example, the first application 110 and the second application 210 each may be a gallery application. Alternatively, the first application 110 may be a file management application, and the second application 210 may be a gallery application. This is not limited herein in this application.

The application keepalive method provided in this embodiment of this application may be applied to the application scenario shown in FIG. 1.

With reference to a procedure shown in FIG. 3, the following describes, by using an example, a specific implementation process of the application keepalive method provided in this embodiment of this application in the application scenario shown in FIG. 1. FIG. 3 is a schematic flowchart of an application keepalive method according to an embodiment of this application. As shown in FIG. 3, the method includes S301 to S308.

S301: A second application 210 receives an operation of viewing first information in a first application 110 by a user.

For example, an application interface of the second application 210 may provide a first control. When the user taps the first control, the second application 210 may be triggered to obtain the first information from the first application 110, and display the first information to the user. The operation of tapping the first control by the user is the operation of viewing the first information in the first application 110 by the user in S301.

The first information is information included in the first application 110. For example, when the first application 110 is a gallery application, the first information may be a picture stored in the first application 110.

S302: The second application 210 obtains the first information from the first application 110, and displays the first information to the user.

When detecting that the second application 210 obtains the first information, the first application 110 performs S303 and S304.

For example, the second application 210 may send an obtaining request of the first information to the first application 110. After receiving the obtaining request of the first information, the first application 110 may return the first information to the second application 210. When receiving the obtaining request of the first information, the first application 110 may detect that the second application 210 obtains the first information.

S303: The first application 110 creates a first object, and generates a unique identifier of the first object.

In some embodiments, the first object may be a virtual object created by the first application 110. For example, the virtual object may be a text, a number, or the like. The virtual object may be randomly generated by the first application 110 or generated according to a rule. This is not limited herein.

In some other embodiments, the first object may alternatively be created by the first application 110 based on the first information, or the first object may be the first information. For example, when the first application 110 is a gallery application, and the first information is a picture 1 stored in the first application 110, the first object may be text data created based on the picture 1, or the first object may be the picture 1.

The unique identifier of the first object may be generated by the first application 110 based on device information of a first device 100, application information of the first application 110, object information of the first object, timestamp information generated when the first object is created, or the like. The unique identifier of the first object may include the device information of the first device 100, the application information of the first application 110, the object information of the first object, and the timestamp information generated when the first object is created.

For example, the device information of the first device 100 may be a device name or a device model of the first device 100. The application information of the first application 110 may be an application name or an application type of the first application 110. The object information of the first object may be a name of the first object.

For example, it is assumed that the first object created by the first application 110 is "Object", the device model of the first device 100 is "12345", the application name of the first application 110 is "photo", and the timestamp at which the first object is created is "20201027", the unique identifier of the first object may be "12345_photo_Object_20201027".

It should be noted that a specific format of the unique identifier of the first object is not limited in this embodiment of this application.

S304: The first application 110 sends the unique identifier of the first object to the second application 210.

Correspondingly, the second application 210 receives the unique identifier of the first object from the first application 110.

S305: The second application 210 sends a subscription request to the first application 110 based on the unique identifier of the first object.

Correspondingly, the first application 110 receives the subscription request from the second application 210.

The subscription request is used to indicate, to the first application 110, that the second application 210 subscribes to the first object, and the subscription request includes identification information of the second application 210.

For example, the identification information of the second application 210 may be a name of the second application 210.

S306: The first application 110 adds the identification information of the second application 210 to a subscription list of the first object based on the subscription request.

After the first application 110 adds the identification information of the second application 210 to the subscription list of the first object, it indicates that a collaborative relationship is established between the first application 110 and the second application 210.

In a process in which the user views the first information in the first application 110 by using the second application 210, when an operating system of the first device 100 needs to forcibly kill some applications running on the first device 100 to release system resources due to a limitation of the system resources, the identification information of the second application 210 included in the subscription list of the first object may be used to indicate the first device 100 to prolong a time to live of the first application 110. For example, refer to S307 and S308.

S307: When the operating system of the first device 100 needs to forcibly kill some applications running on the first device 100 to release the system resources due to the limitation of the system resources, the operating system of the first device 100 queries the subscription list of the first object.

For example, the operating system of the first device 100 is an Android^{™} system. The Android^{™} system includes a lowmemorykiller component. The lowmemorykiller component may be configured to forcibly kill some applications running on the first device 100 to release the system resources.

S308: When the subscription list of the first object includes the identification information of the second application 210, the operating system of the first device 100 prolongs the time to live of the first application 110.

In some embodiments, that the operating system of the first device 100 prolongs the time to live of the first application 110 may include: The operating system of the first device 100 does not forcibly kill the first application 110.

In some other embodiments, that the operating system of the first device 100 prolongs the time to live of the first application 110 may also include: The operating system of the first device 100 increases a priority of the first application 110 in all applications that are currently running. A higher priority indicates a longer time to live of the application.

Optionally, that the operating system of the first device 100 increases the priority of the first application 110 in all the applications that are currently running may be: increasing the priority of the first application 110 in all the applications that are currently running to the highest priority. For example, it is assumed that the applications currently running on the first device 100 include an application A, an application B, and the first application 110. Current priorities of the application A, the application B, and the first application 110 are as follows: The priority of the application A is higher than that of the application B, and the priority of the application B is higher than that of the first application 110. In this case, the operating system of the first device 100 may adjust the priorities of the three applications in sequence as follows: The priority of the first application 110 is higher than that of the application A, the priority of the application A is higher than that of the application B. When forcibly killing the applications, the operating system of the first device 100 first kills the application B, and finally kills the first application 110. Therefore, the time to live of the first application 110 may be longer.

Alternatively, that the operating system of the first device 100 increases the priority of the first application 110 in all the applications that are currently running may be: increasing the priority of the first application 110 in all the applications that are currently running by at least one priority. For example, an example in which the applications that are currently running on the first device 100 include the application A, the application B, and the first application 110 is also used. The operating system of the first device 100 may adjust the priorities of the three applications in sequence as follows: The priority of the application A is higher than that of the first application 110, and the priority of the first application 110 is higher than that of the application B. When forcibly killing the applications, the operating system of the first device 100 first kills the application B, and finally kills the application A. The time to live of the first application 110 may also be longer.

It should be noted that a specific manner in which the operating system of the first device 100 prolongs the time to live of the first application 110 is not limited in this embodiment of this application.

In addition, it should be understood that in this embodiment of this application, when the second application 210 does not receive the operation of viewing the first information in the first application 110 by the user, the subscription list of the first object does not include the identification information of the second application 210. This indicates that there is no collaborative relationship between the first application 110 and the second application 210. When the operating system of the first device 100 needs to forcibly kill some applications running on the first device 100 to release the system resources due to the limitation of the system resources, after the operating system of the first device 100 queries the subscription list of the first object, because the subscription list of the first object does not include the identification information of the second application 210, the operating system of the first device 100 does not need to prolong the time to live of the first application 110, for example, may directly kill the first application 110, or may maintain the priority of the first application 110.

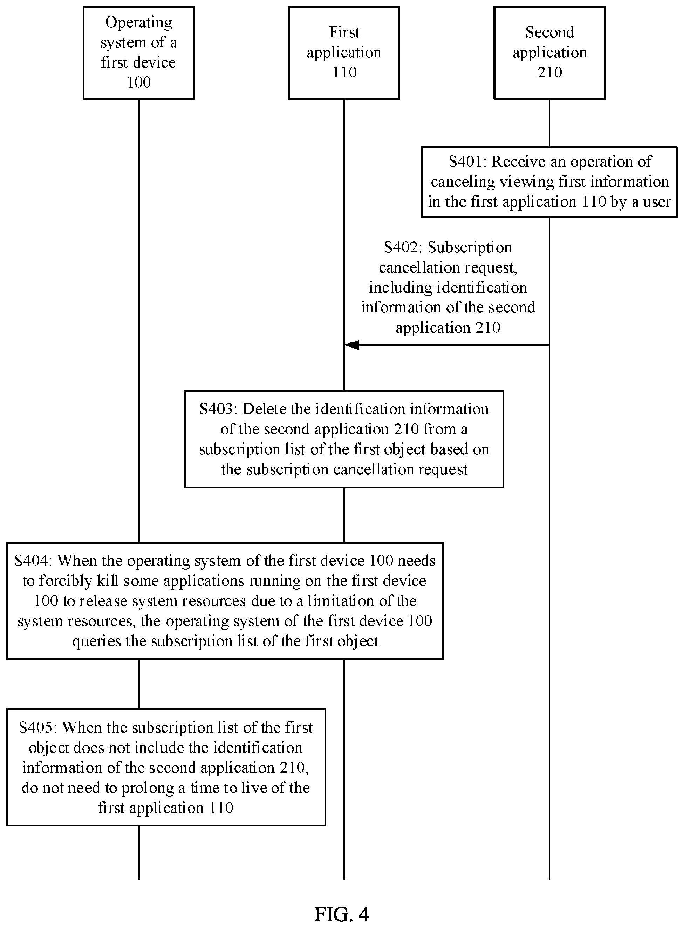

Based on such an understanding, in this embodiment of this application, when the second application 210 receives an operation of canceling viewing information in the first application by the user, the first application 110 may be triggered to delete the identification information of the second application 210 from the subscription list of the first object, so that when the operating system of the first device 100 needs to forcibly kill some applications running on the first device 100 to release the system resources due to the limitation of the system resources, the time to live of the first application 110 does not need to be prolonged. For example, FIG. 4 is another schematic flowchart of an application keepalive method according to an embodiment of this application. As shown in FIG. 4, the method may include S401 to S405.

S401: A second application 210 receives an operation of canceling viewing first information in a first application 110 by a user.

For example, an application interface of the second application 210 may provide a second control. When the user taps the second control, the second application 210 may be triggered no longer to obtain the first information from the first application 110. The operation of tapping the second control by the user is the operation of canceling viewing the first information in the first application 110 by the user in S401.

For the first information, refer to the description in S301.

After receiving the operation of canceling viewing the first information in the first application 110 by the user, the second application 210 no longer obtains the first information from the first application 110, and performs S402 at the same time.

S402: The second application 210 sends a subscription cancellation request to the first application 110 based on a unique identifier of a first object.

Correspondingly, the first application 110 receives the subscription cancellation request from the second application 210.

The subscription cancellation request is used to indicate, to the first application 110, that the second application 210 cancels subscribing to the first object, and the subscription cancellation request may alternatively include identification information of the second application 210.

S403: The first application 110 deletes the identification information of the second application 210 from a subscription list of the first object based on the subscription cancellation request.

After the first application 110 deletes the identification information of the second application 210 from the subscription list of the first object, it indicates that there is no collaborative relationship between the first application 110 and the second application 210.

In this case, when an operating system of a first device 100 needs to forcibly kill some applications running on the first device 100 to release system resources due to a limitation of the system resources, the subscription list of the first object no longer includes the identification information of the second application 210, and that the first device 100 does not need to prolong a time to live of the first application 110 can be indicated. For example, refer to S404 and S405.

S404: When the operating system of the first device 100 needs to forcibly kill some applications running on the first device 100 to release the system resources due to the limitation of the system resources, the operating system of the first device 100 queries the subscription list of the first object.

S405: When the subscription list of the first object does not include the identification information of the second application 210, the operating system of the first device 100 does not need to prolong the time to live of the first application 110.

Optionally, that the operating system of the first device 100 does not need to prolong the time to live of the first application 110 may be that when the operating system of the first device 100 needs to forcibly kill some applications running on the first device 100 to release the system resources due to the limitation of the system resources, the operating system of the first device 100 does not need to adjust a priority of the first application 110, or directly kills the first application 110.

In this embodiment of this application, in a process in which the user views the first information in the first application 110 by using the second application 210, when the operating system of the first device 100 needs to forcibly kill some applications running on the first device 100 to release the system resources due to the limitation of the system resources, for the first application 110, the first device may first query the subscription list of the first object. If the subscription list of the first object includes the identification information of the second application 210, it indicates that a collaborative relationship exists between the first application 110 and the second application 210, and the first device 100 can prolong the time to live of the first application 110, so as to prevent an application collaboration function between the first application 110 and the second application 210 from being affected.

It can be learned that, in the method, the collaborative relationship between the first application 110 and the second application 210 may be established in a simple manner, and no periodic heartbeat is required. Therefore, power consumption of the first device 100 and the second device 200 may be low. In addition, compared with a manner in which the first application 110 is restarted after being killed, the method may provide better user experience.

For example, the first device 100 is a mobile phone, the first application 110 is a gallery application 1 installed on the mobile phone, the second device 200 is a smartwatch, and the second application 210 is a gallery application 2 installed on the smartwatch. When the mobile phone is connected to the smartwatch, the gallery application 2 may receive an operation of viewing a picture in the gallery application 1 by the user. The gallery application 2 may obtain and display the picture from the gallery application 1 in response to the operation of viewing the picture in the gallery application 1 by the user. When the gallery application 1 detects that the gallery application 2 obtains the picture, the gallery application 1 may create a first object, and generate a unique identifier of the first object. After generating the unique identifier of the first object, the gallery application 1 may send (share) the unique identifier of the first object to the gallery application 2. The gallery application 2 sends a subscription request to the gallery application 1 based on the unique identifier of the first object. After receiving the subscription request, the gallery application 1 may add identification information of the gallery application 2 to a subscription list of the first object based on the subscription request. After the gallery application 1 adds the identification information of the gallery application 2 to the subscription list of the first object, it indicates that a collaborative relationship (or referred to as a dependence relationship) is established between the gallery application 1 and the gallery application 2.

In a process in which the user views the picture in the gallery application 1 by using the gallery application 2, when an operating system of the mobile phone needs to forcibly kill some applications running on the mobile phone to release system resources due to a limitation of the system resources, for the gallery application 1, the operating system of the mobile phone may first query the subscription list of the first object. If the subscription list of the first object includes the identification information of the gallery application 2, the operating system of the mobile phone may prolong a time to live of the gallery application 1. By using the application keepalive method, the time to live of the gallery application 1 can be prolonged to prevent an application collaboration function between the gallery application 1 and the gallery application 2 from being affected, thereby ensuring user experience. In addition, power consumption of the mobile phone and the smartwatch may be low.

Optionally, in this embodiment of this application, after receiving the unique identifier of the first object from the first application 110, the second application 210 may first verify the unique identifier of the first object, to determine whether the second application 210 has permission to read the unique identifier of the first object. When it is determined that the second application 210 has the permission to read the unique identifier of the first object, the second application 210 performs a subsequent step, for example, S305.

The permission for the second application 210 to read the unique identifier of the first object may be granted by the user to the second application 210 on the second device 200. For example, when the second application 210 receives, for the first time, the unique identifier of the first object from the first application 110, or when the first device 100 establishes a connection to the second device 200, the second device 200 may display a first interface. The first interface may include prompt information: "Whether to allow the second application 210 to read information from the first application 110", an "OK" button, and a "Cancel" button. When the user taps the "OK" button, the second application 210 may be granted the permission to read the unique identifier of the first object. When the user taps the "Cancel" button, the second application 210 has no permission to read the unique identifier of the first object.

It may be understood that if the user does not grant the second application 210 the permission to read the unique identifier of the first object, the second application 210 does not perform the subsequent step.

In this embodiment of this application, after receiving the unique identifier of the first object from the first application 110, the second application 210 first verifies the unique identifier of the first object. After determining that the second application 210 has the permission to read the unique identifier of the first object, a subsequent step is performed, so that user privacy can be better protected.

Optionally, in this embodiment of this application, after receiving a subscription request from the second application 210, the first application 110 may alternatively first verify the subscription request, to determine whether the second application 210 has permission to subscribe to the first object. When the first application 110 determines that the second application 210 has the permission to subscribe to the first object, a subsequent step, for example, S306, is performed.

Similarly, the permission for the second application 210 to subscribe to the first object may be granted by the user to the second application 210 on the first device 100. For example, when the first application 110 receives, for the first time, the subscription request from the second application 210, or when the first device 100 establishes a connection to the second device 200, the first device 100 may display a second interface. The second interface may include prompt information: "Whether to allow the second application 210 to subscribe to the first object", an "OK" button, and a "Cancel" button. When the user taps the "OK" button, the second application 210 may be granted the permission to subscribe to the first object. When the user taps the "Cancel" button, the second application 210 has no permission to subscribe to the first object.

It may be understood that if the user does not grant the second application 210 the permission to subscribe to the first object, the first application 110 does not perform a subsequent step.

In this embodiment of this application, after receiving the subscription request from the second application 210, the first application 110 first verifies the subscription request. After determining that the second application 210 has the permission to subscribe to the first object, a subsequent step is performed, so that user privacy can also be better protected.

In other words, because the application keepalive method provided in this embodiment of this application relates to operating data of an application, in the method, the application keepalive may be implemented only after the user agrees and grants corresponding permission, so as to better protect user privacy.

The foregoing embodiments mainly describe the specific implementation process of the application keepalive method provided in embodiments of this application in the application scenario shown in FIG. 1. The first application 110 and the second application 210 are respectively installed on two different devices (the first device 100 and the second device 200). However, it should be noted that the application keepalive method provided in embodiments of this application is alternatively applicable between two applications installed on a same device, to implement a keepalive. When the application keepalive method is applied between two applications installed on a same device, a specific procedure is similar to the interaction procedure between the first application 110 and the second application 210 in the foregoing embodiments, and details are not described again.

Finally, it should be further noted that, although embodiments of this application are described by using an example in which an application collaboration function is implemented between a first application and a second application, it should be understood that there may be a plurality of applications that implement the collaboration function with the first application. Each application may implement the collaboration function with the first application, and subscribe, based on the procedure described in the foregoing embodiments, to a first object created by the first application. The first application may add identification information of all applications that subscribe to the first object to a subscription list of the first object. In a case in which there are a plurality of applications that implement the collaboration function with the first application, when an operating system of the first device (or a device in which the first application is located) needs to forcibly kill some applications running on the first device to release system resources due to a limitation of the system resources, for the first application, the operating system of the first device may first query the subscription list of the first object. If the subscription list of the first object includes identification information of another application, it indicates that the first object is subscribed to by another application, a collaborative relationship exists between the first application and the another application, and the operating system of the first device can prolong a time to live of the first application.

In other words, in embodiments of this application, the second application mentioned above may include a plurality of applications (for example, a third application). When the operating system of the first device needs to forcibly kill some applications running on the first device to release the system resources due to the limitation of the system resources, if the subscription list of the first object includes identification information of at least one third application, it indicates that the first object is subscribed to by the third application, a collaborative relationship exists between the first application and the third application, and the operating system of the first device may prolong the time to live of the first application. Herein, the third application may be referred to as a subscriber.

Optionally, in embodiments of this application, when the first object is the first information in the first application, the technical solutions in embodiments of this application may be actually understood as follows: When another application reads (obtains) the first information, the first application records the identification information of the another application in the subscription list of the first object (for details, refer to the foregoing embodiments). If the subscription list of the first object includes the identification information of the another application, it indicates that the first information is being read by the another application. Therefore, when the operating system of the first device needs to forcibly kill some applications running on the first device to release the system resources, the time to live of the first application may be appropriately prolonged.

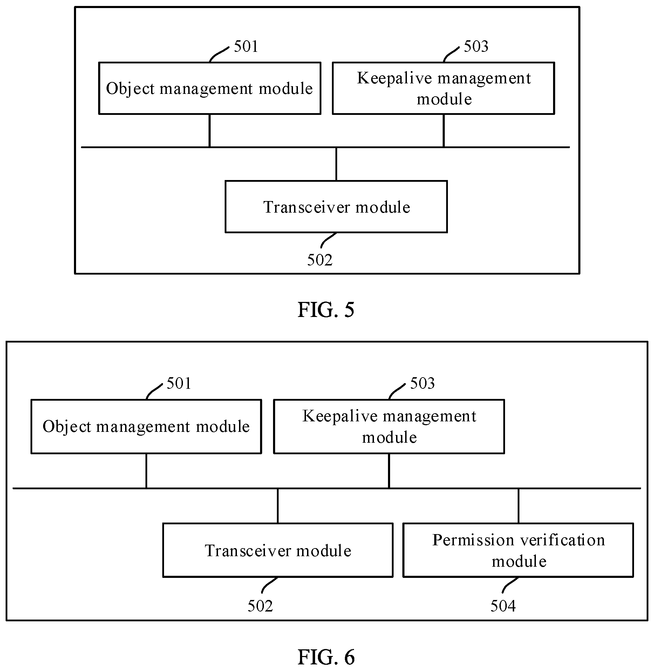

Corresponding to the application keepalive method in the foregoing embodiment, an embodiment of this application further provides an application keepalive apparatus. The apparatus may be used in a first device. For example, the apparatus may be jointly deployed in the foregoing first device with a first application in a form of code, and the first device may invoke the code to implement a function of the first application in the foregoing application keepalive method. There is an application collaboration function between the first application and a second application. FIG. 5 is a schematic diagram of a structure of the application keepalive apparatus according to this embodiment of this application. As shown in FIG. 5, the apparatus may include: an object management module 501, a transceiver module 502, and a keepalive management module 503.

The object management module 501 is configured to: when it is detected that the second application obtains first information in the first application, create a first object, and generate a unique identifier of the first object. The transceiver module 502 is configured to: send the unique identifier of the first object to the second application; and receive a subscription request that is sent by the second application based on the unique identifier of the first object. The subscription request includes identification information of the second application. The keepalive management module 503 is configured to add the identification information of the second application to a subscription list of the first object based on the subscription request.

When an operating system of the first device needs to forcibly kill some applications running on the first device to release system resources due to a limitation of the system resources, for the first application, the operating system of the first device queries the subscription list of the first object; and the operating system of the first device prolongs a time to live of the first application if the subscription list of the first object includes the identification information of the second application.

In some embodiments, the operating system of the first device is specifically configured to increase a priority of the first application in all applications that are currently running on the first device by at least one priority. A higher priority indicates a longer time to live of the application.

Optionally, the operating system of the first device is specifically configured to increase the priority of the first application in all the applications that are currently running on the first device to a highest priority.

Optionally, the subscription request is sent by the second application to the first application after the second application verifies that the second application has permission to read the unique identifier of the first object.

Optionally, FIG. 6 is a schematic diagram of another structure of the application keepalive apparatus according to this embodiment of this application. As shown in FIG. 6, the apparatus may further include: a permission verification module 504, configured to verify whether the second application has permission to subscribe to the first object; and the keepalive management module 503, specifically configured to add the identification information of the second application to the subscription list of the first object based on the subscription request after the permission verification module 504 verifies that the second application has the permission to subscribe to the first object.

Optionally, the transceiver module 502 is further configured to receive a subscription cancellation request that is sent by the second application based on the unique identifier of the first object. The subscription cancellation request includes the identification information of the second application. The keepalive management module 503 is further configured to delete the identification information of the second application from the subscription list of the first object based on the subscription cancellation request. When the operating system of the first device needs to forcibly kill some applications running on the first device to release the system resources due to the limitation of the system resources, for the first application, the operating system of the first device queries the subscription list of the first object; and the operating system of the first device does not need to prolong the time to live of the first application if the subscription list of the first object does not include the identification information of the second application.

Optionally, the unique identifier of the first object includes device information of the first device, application information of the first application, object information of the first object, and timestamp information generated when the first object is created.

Optionally, the first application and the second application are located in a same device or different devices.

Optionally, the second application includes a plurality of third applications. If the subscription list of the first object includes identification information of at least one third application, the operating system of the first device is specifically configured to prolong the time to live of the first application.

It may be understood that, for a specific implementation principle of each module in the apparatus, reference may be made to the description in the foregoing method embodiments.

It should be understood that division of units or modules (referred to as units below) in the foregoing apparatus is merely logical function division. During actual implementation, all or some of the units may be integrated into one physical entity or may be physically separated. In addition, all the units in the apparatus may be implemented in a form in which a processing element invokes software, or may be implemented in a form of hardware; or some units may be implemented in a form in which a processing element invokes software, and some units are implemented in a form of hardware.

For example, the units may be separately disposed processing elements, or may be integrated into a chip of the apparatus for implementation. In addition, the units may alternatively be stored in a memory in a form of a program, and a processing element of the apparatus invokes and performs a function of the units. In addition, all or some of the units may be integrated, or may be implemented independently. The processing element herein may also be referred to as a processor, and may be an integrated circuit having a signal processing capability. During implementation, steps in the foregoing method or the units mentioned above may be implemented by using a hardware integrated logic circuit in the processor element, or may be implemented in a form in which a processing element invokes software.

In an example, the units in the foregoing apparatus may be one or more integrated circuits configured to implement the foregoing method, for example, one or more application specific integrated circuits (application specific integrated circuits, ASICs), or one or more digital signal processors (digital signal processors, DSPs), or one or more field programmable gate arrays (field programmable gate arrays, FPGAs), or a combination of at least two of these integrated circuit forms.

For another example, when the units in the apparatus may be implemented in a form in which a processing element schedules a program, the processing element may be a general-purpose processor, for example, a CPU or another processor that can invoke a program. For still another example, the units may be integrated and implemented in a form of a system-on-a-chip (system-on-a-chip, SOC).

In an implementation, the units that implement the corresponding steps in the foregoing method in the foregoing apparatus may be implemented in a form in which a processing element schedules a program. For example, the apparatus may include a processing element and a storage element. The processing element invokes a program stored in the storage element, to perform the method in the foregoing method embodiments. The storage element may be a storage element located on a same chip as the processing element, that is, an on-chip storage element.

In another implementation, a program for performing the foregoing method may be run on a storage element located on a chip different from that of the processing element, that is, an off-chip storage element. In this case, the processing element invokes or loads a program from the off-chip storage element to the on-chip storage element, to invoke and perform the method in the foregoing method embodiments.

For example, an embodiment of this application may further provide an apparatus, such as an electronic device. The electronic device may include a processor and a memory configured to store executable instructions of the processor. When the processor is configured to execute the foregoing instructions, the electronic device is enabled to implement the application keepalive method described in the foregoing embodiment. The memory may be located inside the electronic device, or may be outside the electronic device. There are one or more processors.

For example, the electronic device may be the foregoing first device.

In still another implementation, the units that implement steps in the foregoing method in the apparatus may be configured as one or more processing elements. The processing element herein may be an integrated circuit, for example, one or more ASICs, or one or more DSPs, or one or more FPGAs, or a combination of these integrated circuits. These integrated circuits may be integrated to form a chip.

For example, an embodiment of this application further provides a chip, and the chip may be used in the foregoing electronic device. The chip includes one or more interface circuits and one or more processors. The interface circuit and the processor are interconnected through a line. The processor receives and executes computer instructions from a memory of an electronic device through the interface circuit, to implement the application keepalive method described in the foregoing embodiment.

An embodiment of this application further provides a computer program product, including computer-readable code. When the computer-readable code is run on an electronic device, the electronic device is enabled to implement the application keepalive method described in the foregoing embodiment.

The foregoing descriptions of implementations allow a person skilled in the art to clearly understand that, for a convenient and brief description, division of the foregoing functional modules is used as an example for illustration. During actual application, the foregoing functions can be allocated to different modules to be implemented as required, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division of the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of this embodiment.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of this embodiment of this application essentially, or a part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard drive, a ROM, a RAM, a magnetic disk, or an optical disc.

For example, an embodiment of this application may further provide a computer-readable storage medium. The computer-readable storage medium stores computer program instructions. When the computer program instructions are executed by the electronic device, the electronic device is enabled to implement the application keepalive method described in the foregoing embodiment.

## Claims

1. An application keepalive method, wherein the method is applied to a first device (100), the first device (100) comprises a first application (110), and there is an application collaboration function between the first application (110) and a second application (210); and the method comprises:
when the first application detects that the second application (210) obtains (S302) first information in the first application (110), creating (S303), by the first application (110), a first object, and generating a unique identifier of the first object;
sending (S304), by the first application (110), the unique identifier of the first object to the second application (210);
receiving (S305), by the first application (110), a subscription request that is sent by the second application (210) based on the unique identifier of the first object, wherein the subscription request comprises identification information of the second application (210);
adding (S306), by the first application (110), the identification information of the second application (210) to a subscription list of the first object based on the subscription request; and
when an operating system of the first device (100) needs to forcibly kill some applications running on the first device (100) to release system resources due to a limitation of the system resources, querying (S307), by the operating system of the first device (100), the subscription list of the first object; and prolonging (S308), by the operating system of the first device (100), a time to live of the first application (110) if the subscription list of the first object comprises the identification information of the second application (210).

2. The method according to claim 1, wherein the prolonging, by the operating system of the first device (100), a time to live of the first application (110) comprises:
increasing, by the operating system of the first device (100), a priority of the first application (110) in all applications that are currently running on the first device (100) by at least one priority, wherein a higher priority indicates a longer time to live of the application.

3. The method according to claim 2, wherein the increasing, by the operating system of the first device (100), a priority of the first application (110) in all applications that are currently running on the first device (100) by at least one priority comprises:
increasing, by the operating system of the first device (100), the priority of the first application (110) in all the applications that are currently running on the first device (100) to a highest priority.

4. The method according to claim 1, wherein the subscription request is sent by the second application (210) to the first application (110) after the second application (210) verifies that the second application (210) has permission to read the unique identifier of the first object.

5. The method according to claim 1, wherein the adding, by the first application (110), the identification information of the second application (210) to a subscription list of the first object based on the subscription request comprises:
verifying, by the first application (110), whether the second application (210) has permission to subscribe to the first object; and
adding, by the first application (110), the identification information of the second application (210) to the subscription list of the first object based on the subscription request after the first application (110) verifies that the second application (210) has the permission to subscribe to the first object.

6. The method according to any one of claims 1 to 5, wherein the method further comprises:
receiving, by the first application (110), a subscription cancellation request that is sent by the second application (210) based on the unique identifier of the first object, wherein the subscription cancellation request comprises the identification information of the second application (210);
deleting, by the first application (110), the identification information of the second application (210) from the subscription list of the first object based on the subscription cancellation request; and
when the operating system of the first device (100) needs to forcibly kill some applications running on the first device (100) to release system resources due to the limitation of the system resources, querying, by the operating system of the first device (100), the subscription list of the first object; and skipping prolonging, by the operating system of the first device (100), the time to live of the first application (110) if the subscription list of the first object does not comprise the identification information of the second application (210).

7. The method according to any one of claims 1 to 6, wherein the unique identifier of the first object comprises device information of the first device (100), application information of the first application (110), object information of the first object, and timestamp information generated when the first object is created.

8. The method according to any one of claims 1 to 7, wherein the first application (110) and the second application (210) are located in a same device or different devices.

9. The method according to any one of claims 1 to 8, wherein the second application (210) comprises a plurality of third applications; and
the prolonging, by the operating system of the first device (100), the time to live of the first application (110) if the subscription list of the first object comprises the identification information of the second application (210) comprises:
prolonging, by the operating system of the first device (100), the time to live of the first application (110) if the subscription list of the first object comprises identification information of at least one third application.

10. An electronic device, comprising a processor, a memory, and a computer program, wherein the computer program is stored in the memory, and when the computer program is executed by the processor, the electronic device is caused to implement the method according to any one of claims 1 to 9.

11. A computer-readable storage medium, wherein the computer-readable storage medium comprises a computer program, and when the computer program is run on an electronic device, the electronic device is caused to implement the method according to any one of claims 1 to 9.

## Patentansprüche

1. Anwendungs-Keep-Alive-Verfahren, wobei das Verfahren auf eine erste Vorrichtung (100) angewendet wird, die erste Vorrichtung (100) eine erste Anwendung (110) umfasst, und zwischen der ersten Anwendung (110) und einer zweiten Anwendung (210) eine Anwendungs-Kollaborationsfunktion vorliegt; und das Verfahren Folgendes umfasst:
wenn die erste Anwendung erkennt, dass die zweite Anwendung (210) erste Informationen in der ersten Anwendung (110) erlangt (S302), Erstellen (S303) eines ersten Objekts durch die erste Anwendung (110) und Erzeugen eines eindeutigen Bezeichners des ersten Objekts;
Senden (S304) des eindeutigen Bezeichners des ersten Objekts durch die erste Anwendung (110) an die zweite Anwendung (210);
Empfangen (S305) einer Abonnementanforderung durch die erste Anwendung (110), die durch die zweite Anwendung (210) basierend auf dem eindeutigen Bezeichner des ersten Objekts gesendet wird, wobei die Abonnementanforderung Identifikationsinformationen der zweiten Anwendung (210) umfasst;
Hinzufügen (S306) der Identifikationsinformationen der zweiten Anwendung (210) durch die erste Anwendung (110) zu einer Abonnementliste des ersten Objekts basierend auf der Abonnementanforderung; und,
wenn ein Betriebssystem der ersten Vorrichtung (100) einige Anwendungen, die auf der ersten Vorrichtung (100) laufen, zwangsweise beenden muss, um Systemressourcen aufgrund einer Begrenzung der Systemressourcen freizugeben, Abfragen (S307) der Abonnementliste des ersten Objekts durch das Betriebssystem der ersten Vorrichtung (100); und Verlängern (S308) einer Lebenszeit der ersten Anwendung (110) durch das Betriebssystem der ersten Vorrichtung (100), wenn die Abonnementliste des ersten Objekts die Identifikationsinformationen der zweiten Anwendung (210) umfasst.

2. Verfahren gemäß Anspruch 1, wobei das Verlängern einer Lebenszeit der ersten Anwendung (110) durch das Betriebssystem der ersten Vorrichtung (100) Folgendes umfasst:
Erhöhen einer Priorität der ersten Anwendung (110) in allen Anwendungen, die derzeit auf der ersten Vorrichtung (100) laufen, durch das Betriebssystem der ersten Vorrichtung (100) um mindestens eine Priorität, wobei eine höhere Priorität eine längere Lebenszeit der Anwendung anzeigt.

3. Verfahren gemäß Anspruch 2, wobei das Erhöhen einer Priorität der ersten Anwendung (110) in allen Anwendungen, die derzeit auf der ersten Vorrichtung (100) laufen, durch das Betriebssystem der ersten Vorrichtung (100) um mindestens eine Priorität Folgendes umfasst:
Erhöhen der Priorität der ersten Anwendung (110) in allen Anwendungen, die derzeit auf der ersten Vorrichtung (100) laufen, durch das Betriebssystem der ersten Vorrichtung (100) auf eine höchste Priorität.

4. Verfahren gemäß Anspruch 1, wobei die Abonnementanforderung durch die zweite Anwendung (210) an die erste Anwendung (110) gesendet wird, nachdem die zweite Anwendung (210) verifiziert hat, dass die zweite Anwendung (210) berechtigt ist, den eindeutigen Bezeichner des ersten Objekts zu lesen.

5. Verfahren gemäß Anspruch 1, wobei das Hinzufügen der Identifikationsinformationen der zweiten Anwendung (210) zu einer Abonnementliste des ersten Objekts durch die erste Anwendung (110) basierend auf der Abonnementanforderung Folgendes umfasst:
Überprüfen, durch die erste Anwendung (110), ob die zweite Anwendung (210) berechtigt ist, das erste Objekt zu abonnieren; und
Hinzufügen der Identifikationsinformationen der zweiten Anwendung (210) zu der Abonnementliste des ersten Objekts durch die erste Anwendung (110) basierend auf der Abonnementanforderung, nachdem die erste Anwendung (110) verifiziert hat, dass die zweite Anwendung (210) berechtigt ist, das erste Objekt zu abonnieren.

6. Verfahren gemäß einem der Ansprüche 1 bis 5, wobei das Verfahren ferner Folgendes umfasst:
Empfangen einer Abonnement-Kündigungsanforderung durch die erste Anwendung (110), die durch die zweite Anwendung (210) basierend auf dem eindeutigen Bezeichner des ersten Objekts gesendet wird, wobei die Abonnement-Kündigungsanforderung die Identifikationsinformationen der zweiten Anwendung (210) umfasst;
Löschen der Identifikationsinformationen der zweiten Anwendung (210) durch die erste Anwendung (110) aus der Abonnementliste des ersten Objekts basierend auf der Abonnement-Kündigungsanforderung; und,
wenn das Betriebssystem der ersten Vorrichtung (100) einige Anwendungen, die auf der ersten Vorrichtung (100) laufen, zwangsweise beenden muss, um Systemressourcen aufgrund der Begrenzung der Systemressourcen freizugeben, Abfragen der Abonnementliste des ersten Objekts durch das Betriebssystem der ersten Vorrichtung (100); und Überspringen des Verlängerns der Lebenszeit der ersten Anwendung (110) durch das Betriebssystem der ersten Vorrichtung (100), wenn die Abonnementliste des ersten Objekts nicht die Identifikationsinformationen der zweiten Anwendung (210) umfasst.

7. Verfahren gemäß einem der Ansprüche 1 bis 6, wobei der eindeutige Bezeichner des ersten Objekts Vorrichtungsinformationen der ersten Vorrichtung (100), Anwendungsinformationen der ersten Anwendung (110), Objektinformationen des ersten Objekts und Zeitstempelinformationen, die beim Erstellen des ersten Objekts erzeugt werden, umfasst.

8. Verfahren gemäß einem der Ansprüche 1 bis 7, wobei sich die erste Anwendung (110) und die zweite Anwendung (210) in einer gleichen Vorrichtung oder in verschiedenen Vorrichtungen befinden.

9. Verfahren gemäß einem der Ansprüche 1 bis 8, wobei die zweite Anwendung (210) eine Vielzahl von dritten Anwendungen umfasst; und
das Verlängern der Lebenszeit der ersten Anwendung (110) durch das Betriebssystem der ersten Vorrichtung (100), wenn die Abonnementliste des ersten Objekts die Identifikationsinformationen der zweiten Anwendung (210) umfasst, Folgendes umfasst:
Verlängern der Lebenszeit der ersten Anwendung (110) durch das Betriebssystem der ersten Vorrichtung (100), wenn die Abonnementliste des ersten Objekts Identifikationsinformationen von mindestens einer dritten Anwendung umfasst:

10. Elektronische Vorrichtung, die einen Prozessor, einen Speicher und ein Computerprogramm umfasst, wobei das Computerprogramm in dem Speicher gespeichert ist und, wenn das Computerprogramm durch den Prozessor ausgeführt wird, die elektronische Vorrichtung veranlasst wird, das Verfahren gemäß einem der Ansprüche 1 bis 9 durchzuführen.

11. Computerlesbares Speichermedium, wobei das computerlesbare Speichermedium ein Computerprogramm umfasst und, wenn das Computerprogramm auf einer elektronischen Vorrichtung ausgeführt wird, die elektronische Vorrichtung veranlasst wird, das Verfahren gemäß einem der Ansprüche 1 bis 9 durchzuführen.

## Revendications

1. Procédé de maintien d'application, dans lequel le procédé est appliqué à un premier dispositif (100), le premier dispositif (100) comprend une première application (110), et il existe une fonction de collaboration d'application entre la première application (110) et une deuxième application (210) ; et le procédé comprend :
lorsque la première application détecte que la deuxième application (210) obtient (S302) de premières informations dans la première application (110), la création (S303), par la première application (110), d'un premier objet, et la génération d'un identifiant unique du premier objet ;
l'envoi (S304), par la première application (110), de l'identifiant unique du premier objet à la deuxième application (210) ;
la réception (S305), par la première application (110), d'une demande d'abonnement qui est envoyée par la deuxième application (210) sur la base de l'identifiant unique du premier objet, dans lequel la demande d'abonnement comprend des informations d'identification de la deuxième application (210) ;
l'ajout (S306), par la première application (110), des informations d'identification de la deuxième application (210) à une liste d'abonnement du premier objet sur la base de la demande d'abonnement ; et
lorsqu'un système d'exploitation du premier dispositif (100) doit arrêter de force certaines applications fonctionnant sur le premier dispositif (100) pour libérer des ressources système en raison d'une limitation des ressources système, l'interrogation (S307), par le système d'exploitation du premier dispositif (100), de la liste d'abonnement du premier objet ; et la prolongation (S308), par le système d'exploitation du premier dispositif (100), d'une durée de vie de la première application (110) si la liste d'abonnement du premier objet comprend les informations d'identification de la deuxième application (210).

2. Procédé selon la revendication 1, dans lequel la prolongation, par le système d'exploitation du premier dispositif (100), d'une durée de vie de la première application (110) comprend :
l'augmentation, par le système d'exploitation du premier dispositif (100), d'une priorité de la première application (110) dans toutes les applications qui fonctionnent actuellement sur le premier dispositif (100) d'au moins une priorité, dans lequel une priorité plus élevée indique une durée de vie plus longue de l'application.

3. Procédé selon la revendication 2, dans lequel l'augmentation, par le système d'exploitation du premier dispositif (100), d'une priorité de la première application (110) dans toutes les applications qui fonctionnent actuellement sur le premier dispositif (100) d'au moins une priorité comprend :
l'augmentation, par le système d'exploitation du premier dispositif (100), de la priorité de la première application (110) dans toutes les applications qui fonctionnent actuellement sur le premier dispositif (100) à une priorité la plus élevée.

4. Procédé selon la revendication 1, dans lequel la demande d'abonnement est envoyée par la deuxième application (210) à la première application (110) après que la deuxième application (210) a vérifié que la deuxième application (210) a l'autorisation de lire l'identifiant unique du premier objet.

5. Procédé selon la revendication 1, dans lequel l'ajout, par la première application (110), des informations d'identification de la deuxième application (210) à une liste d'abonnement du premier objet, sur la base de la demande d'abonnement, comprend :
le fait de vérifier, par la première application (110), si la deuxième application (210) a l'autorisation de s'abonner au premier objet ; et
l'ajout, par la première application (110), des informations d'identification de la deuxième application (210) à la liste d'abonnement du premier objet sur la base de la demande d'abonnement après que la première application (110) vérifie que la deuxième application (210) a l'autorisation de s'abonner au premier objet.

6. Procédé selon l'une quelconque des revendications 1 à 5, dans lequel le procédé comprend également :
la réception, par la première application (110), d'une demande d'annulation d'abonnement qui est envoyée par la deuxième application (210) sur la base de l'identifiant unique du premier objet, dans lequel la demande d'annulation d'abonnement comprend les informations d'identification de la deuxième application (210) ;
la suppression, par la première application (110), des informations d'identification de la deuxième application (210) de la liste d'abonnement du premier objet sur la base de la demande d'annulation d'abonnement ; et
lorsque le système d'exploitation du premier dispositif (100) doit arrêter de force certaines applications fonctionnant sur le premier dispositif (100) pour libérer des ressources système en raison de la limitation des ressources système, l'interrogation, par le système d'exploitation du premier dispositif (100), de la liste d'abonnement du premier objet ; et
le saut de la prolongation, par le système d'exploitation du premier dispositif (100), de la durée de vie de la première application (110) si la liste d'abonnement du premier objet ne comprend pas les informations d'identification de la deuxième application (210).

7. Procédé selon l'une quelconque des revendications 1 à 6, dans lequel l'identifiant unique du premier objet comprend des informations de dispositif du premier dispositif (100), des informations d'application de la première application (110), des informations d'objet du premier objet, et des informations d'horodatage générées lorsque le premier objet est créé.

8. Procédé selon l'une quelconque des revendications 1 à 7, dans lequel la première application (110) et la deuxième application (210) sont situées dans un même dispositif ou dans des dispositifs différents.

9. Procédé selon l'une quelconque des revendications 1 à 8, dans lequel la deuxième application (210) comprend une pluralité de troisièmes applications ; et
la prolongation, par le système d'exploitation du premier dispositif (100), de la durée de vie de la première application (110) si la liste d'abonnement du premier objet comprend les informations d'identification de la deuxième application (210) comprend :
la prolongation, par le système d'exploitation du premier dispositif (100), de la durée de vie de la première application (110) si la liste d'abonnement du premier objet comprend des informations d'identification d'au moins une troisième application.

10. Dispositif électronique, comprenant un processeur, une mémoire, et un programme informatique, dans lequel le programme informatique est stocké dans la mémoire, et lorsque le programme informatique est exécuté par le processeur, le dispositif électronique est amené à mettre en œuvre le procédé selon l'une quelconque des revendications 1 à 9.

11. Support de stockage lisible par ordinateur, dans lequel le support de stockage lisible par ordinateur comprend un programme informatique, et lorsque le programme informatique fonctionne sur un dispositif électronique, le dispositif électronique est amené à mettre en œuvre le procédé selon l'une quelconque des revendications 1 à 9.
